# EUROPÄISCHE PATENTSCHRIFT

(11) **EP 1 119 754 B1**
(45) Veröffentlichungstag und Bekanntmachung des Hinweises auf die Patenterteilung: **16.03.2005**
(21) Anmeldenummer: 99934553.1
(22) Anmeldetag: 02.07.1999
(51) Int. Cl.: G01M 3/20

(54) **VERFAHREN UND EINRICHTUNG ZUR TESTGAS-LECKSUCHE**
METHOD AND DEVICE FOR DETECTING TEST GAS LEAKS
PROCEDE ET DISPOSITIF DE DETECTION DE FUITES DE GAZ D'ESSAI

(30) Priorität: 10.10.1998 DE 19846798
(43) Veröffentlichungstag der Anmeldung: 01.08.2001
(73) Patentinhaber: Inficon GmbH, 50968 Köln (DE)
(72) Erfinder: FLOSBACH, Rudolf, D-51688 Wipperfürth (DE)
(74) Vertreter: Leineweber, Jürgen, Dipl.-Phys.
(86) Internationale Anmeldenummer: PCT/EP1999/004579
(87) Internationale Veröffentlichungsnummer: WO 2000/022400

(56) Entgegenhaltungen:
- US-A- 3 645 127
- US-A- 3 803 900
- US-A- 4 487 058

## Beschreibung

Die Erfindung betrifft ein Verfahren zum Betrieb einer Einrichtung zur Testgas-Lecksuche mit einem Testraum, mit einem Schnüffler, mit Mitteln zur Vakuumerzeugung und mit einem Testgasdetektor. Außerdem bezieht sich die Erfindung auf eine für die Durchführung dieses Betriebsverfahrens geeignete Einrichtung.

Aus der US-A-44 87 058 ist eine Einrichtung zur Testgas-Lecksuche der hier betroffenen Art bekannt. An das Lecksuchgerät kann wahlweise ein Testraum oder ein Schnüffler angeschlossen werden. Zum Stand der Technik gehört auch der Inhalt der DE-196 42 099, aus der eine Einrichtung zur integralen Testgas-Lecksuche bekannt ist. Die integrale Lecksuche erfolgt in der Weise, dass der zu untersuchende Prüfling in eine Testkammer oder einen Testraum eingebracht, darin ein Vakuum erzeugt und durch ein eventuell vorhandenes Leck ausströmendes Testgas registriert wird.

Hat sich ein Prüfling nach der integralen Lecksuche als undicht erwiesen, dann ist der Benutzer daran interessiert, den genauen Ort des Lecks festzustellen.

Der vorliegenden Erfindung liegt die Aufgabe zugrunde, bei einer Einrichtung der eingangs erwähnten Art in einfacher Weise die lokale Lecksuche und auch weitere Untersuchungen zu ermöglichen.

Diese Aufgabe wird durch die in den Patentansprüchen enthaltenen Maßnahmen gelöst.

Weitere Vorteile und Einzelheiten der Erfindung sollen anhand von in den Figuren dargestellten Ausführungsbeispielen erläutert werden. Es zeigen
- Figur 1 schematisch einen Folien-Lecksucher nach der Erfindung einschließlich seines Schaltschemas,
- Figur 2 einen Teilschnitt durch die Rahmen, in die die Folien eingespannt sind, und weitere Details in Ansicht sowie
- Figur 3 einen Schnitt durch eine lösbare Verbindung eines an einer Folie befestigten Anschlussstutzens mit einer weiterführenden Leitung.

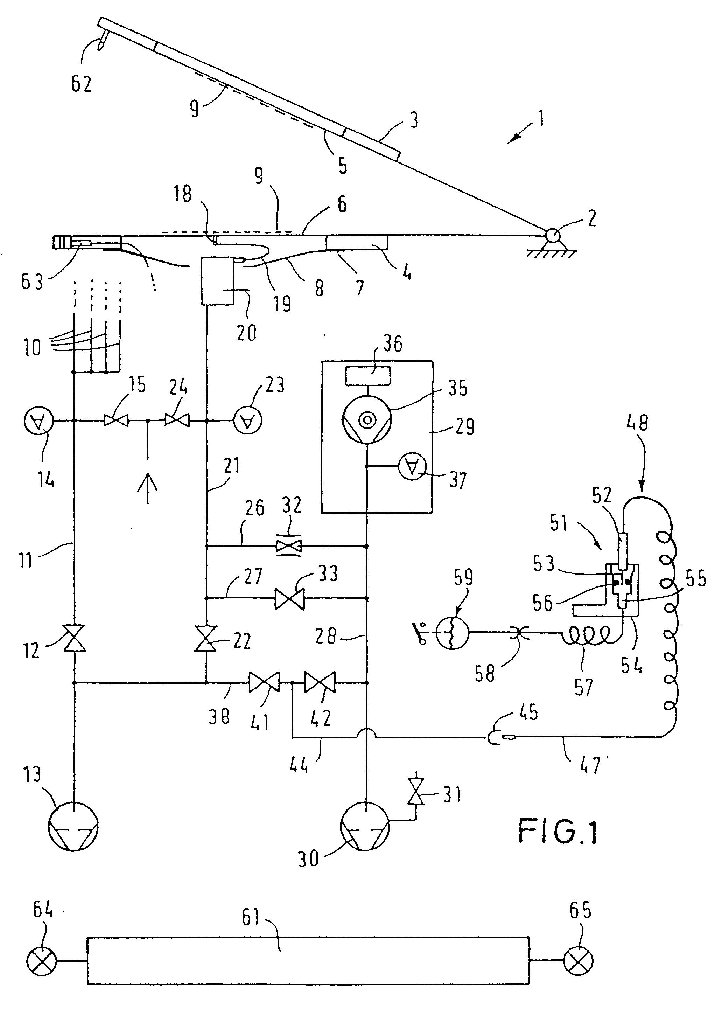

Figur 1 zeigt schematisch den Folien-Lecksucher 1 mit seinen beiden über das Gelenk 2 verbundenen Rahmen 3 und 4 sowie den darin eingespannten Folien 5 und 6. Die Rahmen 3 und 4 sind kreisförmig. Der untere Rahmen stützt sich auf dem Rand 7 eines tellerförmigen Bodens 8 - vorzugsweise aus Stahl - ab. Auf den Folien 5, 6 befindliche Vlies-Abschnitte 9 sichern die Bildung eines zusammenhängenden Testraumes bei eingelegtem Prüfling. Der prinzipielle Aufbau eines Folien-Lecksuchers dieser Art ist im übrigen aus der DE-A-196 42 099 bekannt.

Der untere Rahmen 4 ist mit mehreren im einzelnen nicht dargestellten Bohrungen ausgerüstet, die in das Innere des Testraumes münden, der von den beiden Folien 5, 6 bei eingelegtem Prüfling gebildet wird. An diese Bohrungen sind die Leitungsabschnitte 10 angeschlossen, die über die gemeinsame Leitung 11 mit dem Ventil 12 mit der Vorvakuumpumpe 13 in Verbindung stehen. In Bezug auf das Ventil 12 stromaufwärts sind an die Leitung 11 noch das Druckmessgerät 14 und das Belüftungsventil 15 angeschlossen.

Die untere Folie 6 ist etwa in ihrer Mitte mit einem Leitungsanschluss 18 ausgerüstet, an die sich der Leitungsabschnitt 19, der Filter 20 und die Leitung 21 mit dem Ventil 22 anschließen. Auch die Leitung 21 ist mit einem Druckmessgerät 23 und mit einem Belüftungsventil 24 ausgerüstet.

Der Abschnitt der Leitung 21, der sich zwischen dem Anschluss des Druckmessgerätes 23 und dem Ventil 22 befindet, steht über zwei zueinander parallele Leitungen 26 und 27 mit einer Leitung 28 in Verbindung, die sich zwischen dem Testgasdetektor 29 und einer zweiten Vorvakuumpumpe 30 erstreckt. In der Leitung 26 befindet sich ein Drosselventil 32. Die Leitung 27 ist mit einem Ventil 33 ausgerüstet.

Die Vorvakuumpumpe 13 ist zweckmäßig einstufig, die Vorvakuumpumpe 30 zweistufig ausgebildet. Die Pumpe 30 ist mit einer Gasballast-Einrichtung ausgrüstet. Bei offenem Ventil 31 strömt Luft (oder auch Inertgas) in die Pumpe 30 ein.

Im Testgasdetektor 29 befindet sich eine Turbomolekularvakuumpumpe 35, deren Auslass mit der Leitung 28 in Verbindung steht. An den Einlass der Turbomolekularvakuumpumpe ist ein Massenspektrometer 36 angeschlossen. Außerdem ist ein Druckmessgerät 37 Bestandteil des Leckdetektors 29, welches den Druck in der Leitung 28 misst.

Die beiden Leitungen 11 und 28 stehen in Bezug auf die Ventile 12 und 22 stromabwärts über eine Leitung 38 in Verbindung, in die auch die Leitung 21 mündet. In dieser Leitung 38 befinden sich zwischen der Mündung der Leitung 21 und der Leitung 28 die Ventile 41 und 42. In den zwischen den Ventilen 41 und 42 befindlichen Abschnitt der Leitung 38 mündet eine Leitung 44, die mit einer Kupplung 45 in Verbindung steht. Die Kupplung 45 dient der Herstellung der Verbindung der Leitung 44 mit der Schnüffelleitung 47 eines Schnüfflers 48. Die mit 51 bezeichnete Schnüffelsonde des Schnüfflers 48 umfasst den Handgriff 52 und die Schnüffelspitze 53.

Für die Ablage der Schnüffelsonde ist ein Halter 54 vorgesehen. Dieser ist entweder am Folien-Lecksucher 1 befestigt oder als separater Ständer ausgebildet. Er weist einen Hohlraum 55 auf, der bei abgelegter Sonde 51 die Schnüffelspitze aufnimmt. Außerdem ist eine Dichtung 56 vorgesehen, die den Hohlraum 55 bei abgelegter Sonde 51 gegenüber dem Handgriff 52 abdichtet. An den Hohlraum 55 schließt sich eine Leitung 57 an, die über eine Kupplung 58 mit einem im Gehäuse des Folien-Lecksuchers 1 untergebrachten Unterdruckschalter 59 in Verbindung steht. Als Schnüffelleitung 47 dient in bekannter Weise eine Kapillare (Durchmesser ca. 0,5 mm). Dieses gilt auch für die Leitung 57, damit sich der von der Schnüffelspitze 53 im Raum 55 erzeugte Unterdruck schnell auf den Unterdruckschalter 59 auswirkt.

Im Folien-Lecksucher nach Figur 1 läuft der Lecksuchzyklus automatisch ab. Zur Steuerung des Ablaufs ist die nur als Block 61 dargestellte Steuerzentrale vorgesehen. Mit ihr sind alle Messgeräte und alle zu steuernden Bauteile verbunden. Dieses gilt auch für einen Schalter, der mit dem Schließen des Testraumes betätigt wird. Beim dargestellten Ausführungsbeispiel handelt es sich um einen Näherungsschalter, der einen am Rahmen 3 vorgesehenen Metallstift 62 und einen am Rahmen 4 angeordneten Sensor 63 umfasst. Der Sensor 62 steht mit der Steuerzentrale 2 in Verbindung. Auch andere Schalter, seien sie elektrisch, mechanisch oder optisch betrieben, können zu diesem Zweck eingesetzt werden.

Die Vielzahl der elektrischen Verbindungsleitungen zwischen der Steuerzentrale 61 und den Bauteilen sind der Übersichtlichkeit halber nicht dargestellt. Mit der Steuerzentrale verbunden sind auch zwei Signallampen 64, 65, von denen eine grün, wenn ein Prüfling als dicht, und die andere rot aufleuchtet, wenn ein Prüfling als undicht erkannt wird.

Beim betriebsbereiten Folien-Lecksucher 1 sind, wenn der Testraum - wie in Figur 1 dargestellt - geöffnet bzw. der obere Rahmen 3 vom unteren Rahmen 4 abgehoben ist, sämtliche Ventile - bis auf das Ventil 41 - geschlossen. Nach dem Auflegen eines Prüflings auf die untere Folie 6 und nach dem Auflegen des oberen Rahmens 3 auf den unteren Rahmen 4 löst der Näherungsschalter 62, 63 den Ablauf eines Lecksuchvorganges aus. Dazu wird zunächst geprüft, ob sich im System ein erhöhter Heliumuntergrund befindet, der Leckmessungen verfälschen könnte. Dieses geschieht mit Hilfe des Massenspektrometers 36. Meldet es einen zu hohen Untergrund, wird das Ventil 31 geöffnet und die Pumpe 30 so lange mit Gasballast betrieben, bis der Heliumuntergrund einen unschädlichen Wert angenommen hat.

In der Regel ist ein erhöhter Helium-Untergrund nicht vorhanden, so dass mit dem Schließen des Testraumes auch der eigentliche Lecksuchzyklus beginnt. Zunächst werden die Ventile 12 und 22 geöffnet. Dieses hat eine äußerst schnelle Evakuierung des Raumes zwischen den Folien 5, 6 zur Folge. Außerhalb der Bereiche, in denen sich die Vlies-Abschnitte 9 befinden, bilden die sich unmittelbar berührenden Folien 5, 6 die Abdichtung des Testraumes.

Von Bedeutung ist, dass in der ersten Evakuierphase nur die Ventile 12 und 22 geöffnet sind. Nur in dieser ersten Phase geschieht es, dass die auf Lecks zu untersuchende Wandung/Verpackung des Prüflings einen Defekt erleiden, z.B. platzen könnte. Da in dieser Phase Verbindungen zwischen dem Testraum und dem Leckdetektor geschlossen ist, besteht nicht die Gefahr einer Helium-Verseuchung oder einer Verschmutzung durch aus dem Prüfling austretendes Produkt.

Bei einem Druck von wenigen 100 mbar (100 bis 300 mbar) wird das Drosselventil 32 geöffnet. Es ist so bemessen, dass der notwendige Vorvakuumdruck der Turbomolekularvakuumpumpe 35 keine unzulässig hohen Werte annimmt. Mit dem Öffnen des Drosselventils 32 beginnt die Groblecksuche. Strömt Helium durch das Drosselventil 32, gelangt es im Gegenstrom durch die Turbomolekularpumpe 35 zum Massenspektrometer 36. Wird Helium registriert, ist der Prüfling undicht; der Lecksuchzyklus wird abgebrochen.

Für den Fall, dass Helium noch nicht registriert wird, wird der Evakuierprozess fortgesetzt. Erreicht der Druck einen mit dem Gerät 23 gemessenen Wert, der in der Größenordnung des Vorvakuumdruckes der Turbomolekularpumpe 35 liegt, werden die Ventile 12, 22 und 32 geschlossen und das Ventil 33 geöffnet. Es beginnt die Phase der empfindlichen Lecksuche. Diese wird abgebrochen, wenn entweder Testgas registriert wird, der Prüfling also undicht ist, oder nach einer bestimmten Zeit. Entweder wird eine feste Zeitspanne vorgegeben oder es wird so lange geprüft, bis der Druck (gemessen mit dem Gerät 23) einen bestimmten Wert unterschreitet. Wird innerhalb dieser Zeit Testgas nicht registriert, lässt dieses Ergebnis auf einen dichten Prüfling schließen.

Während der empfindlichen Lecksuchphase stellen nur die Leitungen 19, 21 und 27 die Verbindung zwischen dem Testraum und dem Leckdetektor 29 dar. Ein Platzen des Prüflings ist nicht mehr zu erwarten. Im übrigen befindet sich zwischen den Leitungen 19 und 21 der Partikelfilter 20, der jede Verunreinigung vom Leckdetektor 29 fernhält.

Die Beendigung des Lecksuchzyklus erfolgt in der Weise, dass alle bisher offenen Ventile - bis auf Ventil 41 - geschlossen und die Ventile 15, 24 geöffnet werden. Der Testraum wird belüftet, der obere Rahmen 3 kann vom unteren Rahmen 4 abgehoben werden. Zweckmäßig ist es, wenn die beiden gelenkig miteinander verbundenen Rahmen 3, 4 im Bereich des Gelenks 2 unter der Wirkung einer nicht dargestellten Federeinrichtung stehen, deren Kraft ständig in Öffnungsrichtung wirkt. Ihre Kraft sollte so bemessen sein, dass das während der Lecksuche erzeugte Vakuum den Testraum geschlossen hält und dass der Rahmen 3 nach dem Belüftungsvorgang seine Offenstellung einnimmt.

Wird während der Leckprüfung festgestellt, dass ein Prüfling undicht ist, dann ist der Benutzer daran interessiert, den Ort des Lecks kennenzulernen. Dazu ist der erfindungsgemäße Folienlecksucher mit einem Schnüffler 48 ausgerüstet. Dieser ist mit seiner Schnüffelleitung 47 über die Kupplung 45 an die Leitung 44 angeschlossen.

Solange der Schnüffler 48 nicht genutzt wird, ist er in einem Halter 54 abgelegt. Dieser Halter 54 ist mit den bereits beschriebenen Mitteln 55 bis 59 ausgerüstet, mit deren Hilfe die Steuerzentrale 61 erkennen kann, ob die Sonde 51 im Halter 54 abgelegt ist oder nicht. Auch andere Mittel - seien es mechanisch, elektrisch oder induktiv betätigte Schalter - können zu diesem Zweck verwendet werden.

Solange sich die Sonde 51 im Halter 54 befindet, wird - wie bereits erwähnt - das Ventil 41 offengehalten. Der Schnüffler befindet sich dadurch ständig im stand by. Erst dann, wenn er aus seinem Halter 54 herausgenommen wird, schließt das Ventil 41 und öffnet das Ventil 42. Der den Schnüffler 48 durchsetzende Gasstrom gelangt dadurch in die Leitung 28 und wird von der Pumpe 30 aufrechterhalten. In diesem Zustand ist die Schnüffellecksuche möglich. Wird Helium von der Schnüffelspitze 53 aufgenommen, gelangt es im Gegenstrom durch die Turbomolekularpumpe 35 zum Massenspektrometer 36.

Die Steuerzentrale 61 ist derart programmiert, dass es zu einer Umschaltung des Schnüfflers 48 von stand by auf Lecksuchbetrieb (Umschaltung der Ventile 41 und 42) nicht kommt, solange der Annäherungsschalter 62, 63 geschlossen ist. Die gleichzeitige, zu Fehlmessungen führende Lecksuche über den Folien-Lecksucher 1 und über den Schnüffler 48 ist dadurch ausgeschlossen.

Bei der quantitativen Lecksuche interessiert den Besucher in aller Regel die Leckrate eines aufgefundenen Lecks, gemessen in mbar 1/sec.

Bei der Untersuchung von mit hohen Stückzahlen hergestellten Prüflingen besteht jedoch auch ein Interesse daran, die Konzentration des Testgases im Prüfling zu messen. Dieses kann dadurch geschehen, dass die Schnüffelspitze 53 in den Prüfling eingestochen wird, oder dass der Prüfling mit einem definierten Leck versehen wird und im Folien-Lecksucher 1 ein Lecksuchzyklus ausgeführt wird. Die Steuerzentrale ist deshalb so ausgebildet, dass auf einem nicht dargestellten Display sowohl die Leckrate als auch die Konzentration ablesbar ist.

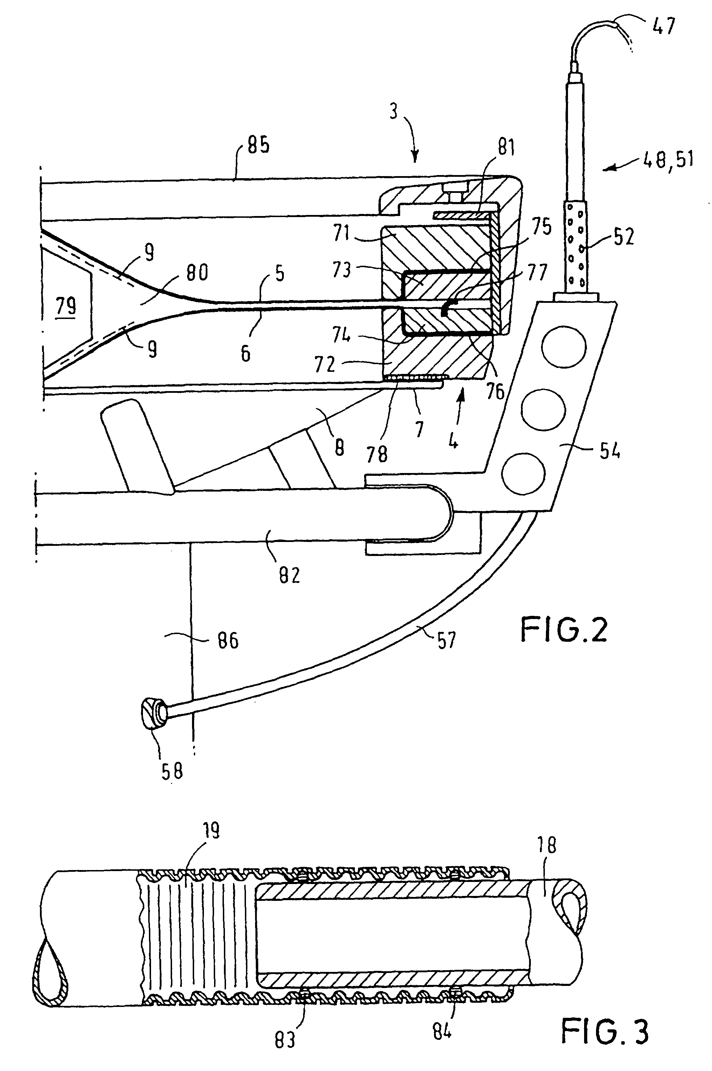

Figur 2 lässt den Aufbau der Rahmen 3 und 4 erkennen. Sie bestehen aus jeweils einem äußeren Ring 71 bzw. 72 und einem inneren Ring 73, 74. Zwischen den Ringpaaren sind die Folien 5, 6 befestigt, vorzugsweise geklebt. Die jeweils inneren Ringe befinden sich in zueinander korrespondierenden Aussparungen 75, 76. Die Aussparungen sind derart angeordnet, dass die äußeren Ringe 71, 72 in ihren dem Testraum zugewandten Bereichen einander unmittelbar gegenüberliegen und dadurch die Ebenen der eingespannten Folien 5, 6 bestimmen. Im äußeren Bereich liegen die inneren Ringe 73, 74 einander unmittelbar gegenüber. Zwischen ihnen befindet sich eine Lippendichtung 77. Die Folien 5, 6 erstrecken sich durch den winkelförmigen Spalt zwischen den jeweiligen Ringpaaren und sind damit vollflächig verklebt.

In Figur 2 ist noch ersichtlich, dass die Folien 5, 6 bei einem dazwischen eingelegten Prüfling 79 einen Testraum 80 bilden. Die Vlies-Abschnitte 9 sichern die Bildung eines zusammenhängenden Testraumes 80.

Der Ring 72 des unteren Rahmens 4 stützt sich auf dem Rand 7 des tellerförmigen Bodens 8 ab und ist mit diesem verklebt (Klebeschicht 78). Dem oberen Rahmen 3 ist ein Träger zugeordnet, der von einem den Rahmen 3 von außen und teilweise von oben umfassendes Stahlprofil 81 gebildet wird. Der Rahmen 3 ist in axialer Richtung schwimmend am Stahlprofil 81 befestigt, so dass er nach seinem Absenken gleichmäßig dem gesamten Umfang des Rahmens 4 aufliegt. Durch die Evakuierung des Testraumes 80 wird zusätzlich noch eine Anpresskraft erzeugt. In axialer Richtung erstreckt sich das Stahlprofil 81 über den Rahmen 3 hinaus nach unten und bildet in der letzten Phase der Absenkbewegung eine Führung. Zur Abdeckung des Stahlringes 81 dient der Dekorring 85.

Figur 2 zeigt noch, dass der dargestellte Folien-Lecksucher mit einem umlaufenden Handgriff 82 ausgerüstet ist. An diesem ist der Halter 54 für den Schnüffler 48 befestigt. Im Halter 54 befinden sich die bereits zu Figur 2 beschriebenen Mittel die erkennen lassen, ob die Sonde 51 des Schnüfflers 48 im Halter 54 abgelegt ist oder nicht. Zwischen dem Halter 54 und dem Gehäuse 86 erstreckt sich der Kapillarschlauch 57, der in die Kupplung 58 eingesteckt ist.

Figur 3 zeigt den Übergang zwischen dem Anschlussstutzen 18 und dem weiterführenden Leitungsabschnitt 19. Beide bestehen aus Kunststoff, vorzugsweise Polyamid. Der Leitungsabschnitt 19 ist als Wellrohr ausgebildet und umgibt gemeinsam mit Dichtringen 83, 84 den Anschlussstutzen 18.

Die Erfindung wurde anhand eines Folien-Lecksuchers erläutert. Sie ist jedoch ausführbar bei jedem Lecksuchgerät, das der integralen Lecksuche von Prüflingen dient.

## Patentansprüche

1. Verfahren zum Betrieb einer Einrichtung (1) zur Testgas-Lecksuche mit einem Testraum (80), mit einem Schnüffler (48), mit Mitteln (13, 20) zur Vakuumerzeugung und mit einem Testgasdetektor (29), **dadurch gekennzeichnet, dass** ein Testgas enthaltender Prüfling (79), der sich bei einer integralen Leckprüfung im Testraum (80) als undicht erwiesen hat, anschließend mit Hilfe des Schnüfflers (48) zwecks Ortung des Lecks untersucht wird.

2. Verfahren nach Anspruch 1, **dadurch gekennzeichnet, dass** sowohl bei der integralen Lecksuche als auch bei der Schnüffel-Lecksuche derselbe Leckdetektor (29) verwendet wird.

3. Verfahren nach Anspruch 2, **dadurch gekennzeichnet, dass** die integrale Lecksuche und die Schnüffel-Lecksuche nicht gleichzeitig durchgeführt werden können.

4. Verfahren nach einem der Ansprüche 1 bis 3, **dadurch gekennzeichnet, dass** bei einem Prüfling (79), aus dem während der integralen Lecksuche Testgas nicht ausgetreten ist, anschließend eine Messung der Testgas-Konzentration des im Prüfling (79) vorhandenen Gases durchgeführt wird.

5. verfahren nach Anspruch 4, **dadurch gekennzeichnet, dass** die Messung der Testgaskonzentration in einem Prüfling (79) derart durchgeführt wird, dass seine wandung mit einem Leck versehen wird und mit diesem Prüfling ein Lecksuchvorgang durchgeführt wird.

6. Einrichtung zur Testgas-Lecksuche, insbesondere für die Durchführung eines Verfahrens nach einem der Ansprüche 1 bis 5, mit einem Testraum (80), mit einem Schnüffler (48), mit Mitteln (13, 20) zur Vakuumerzeugung und mit einem Testgasdetektor (29) geeignete Einrichtung (1), **dadurch gekennzeichnet, dass** der Testgasdetektor (29), der sowohl.bei der integralen Lecksuche als auch bei der Schnüffel-Lecksuche verwendet wird, über eine Leitung (28) mit einer Vakuumpumpe (30) in Verbindung steht und dass sowohl der Testraum (80) über ein Ventil (33) als auch der Schnüffler (48) über ein Ventil (42) an die Leitung (28) angeschlossen sind.

7. Einrichtung (1) nach Anspruch 6, **dadurch gekennzeichnet, dass** Bestandteil des Schnüfflers (48) eine Schnüffelsonde (51) ist, dass ein Halter (54) für die Schnüffelsonde (51) vorgesehen ist und dass der Halter (54) am Gehäuse (86) der Einrichtung befestigt ist.

8. Einrichtung (1) nach Anspruch 7, **dadurch gekennzeichnet, dass** der Halter (54) mit Mitteln ausgerüstet ist, die die Ablage der Schnüffelsonde (51) im Halter (54) erkennen lassen.

9. Einrichtung (1) nach Anspruch 8, **dadurch gekennzeichnet, dass** der Halter (54) einen Hohlraum (55) aufweist, der bei abgelegter Sonde (51) die Schnüffelspitze (53) des Schnüfflers (48) aufnimmt und der mit einem Unterdruckschalter (59) in Verbindung steht.

10. Einrichtung (1) nach Anspruch 9, **dadurch gekennzeichnet, dass** eine Dichtung (56) vorgesehen ist, die den Hohlraum (55) bei abgelegter Sonde (51) abdichtet.

11. Einrichtung (1) nach Anspruch 9 oder 10, **dadurch gekennzeichnet, dass** zur Verbindung des Hohlraumes (55) mit dem Unterdruckschalter (59) ein Kapillarschlauch (57) vorgesehen ist.

## Claims

1. Method for operating a device (1) for test gas leak detection, with a test space (80), with a sniffer (48), with means (13, 20) for vacuum generation and with a test gas detector (29), **characterised in that** a test sample (79), which contains a test gas and which, during integral leak testing in the test space (80) has been found to leak, is subsequently tested with the aid of the sniffer (48) for the purpose of locating the leak.

2. Method according to Claim 1, **characterised in that** both during the integral leak detection and during the sniffing leak detection, the same leak detector (29) is employed.

3. Method according to Claim 2, **characterised in that** the integral leak detection and the sniffing leak detection cannot be carried out simultaneously.

4. Method according to one of Claims 1 to 3, **characterised in that** in the case of a test sample (79) from which no test gas has escaped during the integral leak detection, subsequently a measurement of the test gas concentration of the gas present in the test sample (79) is carried out.

5. Method according to Claim 4, **characterised in that** the measurement of the test gas concentration in a test sample (79) is carried out in such a way that its wall is provided with a leak and a leak detection process is carried out with this test sample.

6. Device for test gas leak detection, in particular for carrying out a method according to one of Claims 1 to 5, with a test space (80), with a sniffer (48), with means (13, 20) for vacuum generation and with a test gas detector (29), **characterised in that** the test gas detector (29), which is employed both during the integral leak detection and during the sniffing leak detection, is connected via a line (28) to a vacuum pump (30) and **in that** both the test space (80) and the sniffer (48) are connected to the line (28), via a valve (33) and a valve (42), respectively.

7. Device (1) according to Claim 6, **characterised in that** a sniffing probe (51) is a component part of the sniffer (48), **in that** a holder (54) for the sniffing probe (51) is provided and **in that** the holder (54) is fastened to the housing (86) of the device.

8. Device (1) according to Claim 7, **characterised in that** the holder (54) is equipped with means which allow detection of the deposition of the sniffing probe (51) in the holder (54).

9. Device (1) according to Claim 8, **characterised in that** the holder (54) contains a hollow space (55), which, with the probe (51) deposited, receives the sniffing tip (53) of the sniffer (48) and which is connected to a negative-pressure switch (59).

10. Device (1) according to Claim 9, **characterised in that** a seal (56) is provided, which, with the probe (51) deposited, seals the hollow space (55).

11. Device (1) according to Claim 9 or 10, **characterised in that** for connecting the hollow space (55) to the negative-pressure switch (59) a capillary hose (57) is provided.

## Revendications

1. Procédé pour exploiter un dispositif (1) de détection de fuite de gaz témoin avec une chambre de test (80), avec un renifleur (48), avec des moyens (13, 20) générateurs de vide et avec un détecteur de gaz témoin (29), **caractérisé en ce qu'**un échantillon (79) contenant un gaz témoin, lequel échantillon s'est avéré non étanche lors d'une vérification de fuite intégrale dans la chambre de test (80), est ensuite analysé à l'aide du renifleur (48) afin de localiser la fuite.

2. Procédé selon la revendication 1, **caractérisé en ce que** l'on utilise le même détecteur de fuite (29), aussi bien pour la recherche de fuite intégrale que pour la recherche de fuite par renifleur.

3. Procédé selon la revendication 2, **caractérisé en ce que** la recherche de fuite intégrale et la recherche de fuite par renifleur ne peuvent pas être réalisées simultanément.

4. Procédé selon l'une quelconque des revendications 1 à 3, **caractérisé en ce que** l'on effectue une mesure de la concentration en gaz témoin du gaz présent dans l'échantillon (79), pour un échantillon (79) duquel n'est pas sorti de gaz témoin pendant la recherche de fuite intégrale préalable.

5. Procédé selon la revendication 4, **caractérisé en ce que** la mesure de la concentration en gaz témoin est réalisée dans un échantillon (79) de telle manière que sa paroi est munie d'une fuite et qu'une procédure recherche de fuite est réalisée avec cet échantillon.

6. Dispositif (1) de recherche de fuite de gaz témoin, notamment pour réaliser un procédé selon l'une quelconque des revendications 1 à 5, comportant une chambre de test (80), un renifleur (48), des moyens (13, 20) générateurs de vide et un détecteur de gaz témoin (29), **caractérisé en ce que** le détecteur de gaz témoin (29), qui est utilisé aussi bien pour la recherche de fuite intégrale que pour la recherche de fuite par renifleur, est raccordé à une pompe à vide (30) à l'aide d'une conduite (28), et **en ce que** sont raccordés à la conduite (28) aussi bien la chambre de test (80) à l'aide d'une soupape (33) que le renifleur (48) à l'aide d'une soupape (42).

7. Dispositif (1) selon la revendication 6, **caractérisé en ce que** le renifleur (48) comprend une sonde renifleuse (51), **en ce qu'**un support (54) est prévu pour la sonde renifleuse (51), et **en ce que** le support (54) est fixé au boîtier (86) du dispositif.

8. Dispositif (1) selon la revendication 7, **caractérisé en ce que** le support (54) est équipé de moyens permettant de reconnaître que la sonde renifleuse (51) est déposée dans le support (54).

9. Dispositif (1) selon la revendication 8, **caractérisé en ce que** le support (54) présente un espace creux (55) qui loge la pointe de reniflage (53) du renifleur (48) lorsque la sonde (51) est déposée, et qui est relié à un manostat à ouverture minimale de pression (59).

10. Dispositif (1) selon la revendication 9, **caractérisé en ce qu'**un joint (56) est prévu, qui étanchéifie l'espace creux (55) lorsque la sonde (51) est déposée.

11. Dispositif (1) selon la revendication 9 ou 10, **caractérisé en ce qu'**une gaine capillaire (57) est prévue pour relier l'espace creux (55) au manostat à ouverture minimale de pression (59).
